## Europäisches Patentamt
## European Patent Office
## Office européen des brevets

(11) Veröffentlichungsnummer: **0 002 789**
**B1**

(12) **EUROPÄISCHE PATENTSCHRIFT**

(45) Veröffentlichungstag der Patentschrift: **16.09.81**

(21) Anmeldenummer: **78101771.0**

(22) Anmeldetag: **19.12.78**

(51) Int. Cl.³: **H 02 G 15/08**

(54) Dichtungskörper zum Einführen von Kabeln in Kabelgarnituren.

(30) Priorität: **22.12.77 DE 7739190 U**

(43) Veröffentlichungstag der Anmeldung:
**11.07.79 Patentblatt 79/14**

(45) Bekanntmachung des Hinweises auf die Patenterteilung:
**16.09.81 Patentblatt 81/37**

(84) Benannte Vertragsstaaten:
**BE CH DE FR GB IT LU NL SE**

(56) Entgegenhaltungen:
DE - A - 2 339 051
DE - A - 2 427 677
DE - A - 2 515 939
DE - A - 2 632 852
DE - U - 7 739 190
US - A - 4 002 818
SIEMENS REVIEW, Vol. 44
Nr. 3, März 1977
Siemens AG, Erlangen
DE, W. GIEBEL et al.,
"Plastic clamping sleeves a
standard accessory for
communications cables",
Seiten 132—137

(73) Patentinhaber: **SIEMENS AKTIENGESELLSCHAFT**
**Berlin und München**
**Postfach 22 02 61**
**D-8000 München 22 (DE)**

(72) Erfinder: **Häder, Wolfgang**
**Hoflacherstrasse 29**
**D-8031 Eichenau (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Dichtungskörper zum Einführen von Kabeln in Kabelgarnituren

Die Erfindung betrifft einen Dichtungskörper mit lamellenförmigen, in Achsrichtung hintereinanderliegenden Abdichtungselementen und mit ausschneidbaren Kabeleinführungsöffnungen zum Einführen von Kabeln in Kabelgarnituren.

In der Kabelgarniturentechnik sind bereits vielfach Dichtungskörper aus thermoplastischem Material bekannt, die als Abdichtung zwischen Kabel und Kabelgarnitur im Einführungsbereich Verwendung finden. Durch die deutsche Offenlegungsschrift 24 27 677 und eine Beschreibung in "Siemens Review" (Vol. 44, Nr. 3, März 1977, Seiten 132 bis 137, Giebel) ist ein derartiger Dichtungskörper mit lamellenartigen Abdichtungselementen bekannt. Bei diesem Dichtungskörper wird die Kabeleinführungsöffnung nach Bedarf ausgeschnitten. Die Trennungsebenen werden mit plastischer Dichtungsmasse belegt und dichten nach dem Zusammenpressen aller Teile gasdicht ab.

In der US—PS 3 545 773 wird ein Dichtungskörper beschrieben, der auf der Außenseite ringförmige Lamellen aufweist. Die dem Kabel zugewandte Seite ist als Dichtungskammer ausgebildet und wird mit schäumbarem Material ausgefüllt. Hierfür sind jedoch besondere Geräte nötig. Bei mechanisch sehr beanspruchten Kabeln ist es unter Umständen möglich, daß die dünnwandigen Lamellen bzw. seitlichen Begrenzungen aufgrund ihrer Elastizität verformt werden und somit die plastische Dichtungsmasse mehr oder weniger verdrängen. Dies kann in kritischen Fällen zu Undichtigkeiten führen.

Der Erfindung lag nun die Aufgabe zugrunde, Dichtungskörper für die Einführungsbereiche von Kabelgarnituren zu schaffen, welche die Vorzüge der Lamellenstruktur aufweisen, die aber besonders für den Einsatz bei mechanisch sehr beanspruchten Kabeln geeignet sind. Weiterhin bestand die Aufgabe, daß der Einsatz und die Montage dieser Dichtungskörper mit den herkömmlichen Werkzeugen vorgenommen werden kann. Die gestellte Aufgabe wird nun durch den Dichtungskörper gemäß der Erfindung dadurch gelöst, daß in die ringförmigen Hohlräume zwischen den einzelnen Abdichtungselementen des Dichtungskörpers halbkreisähnliche Scheiben aus schneidbarem Material eingesetzt sind, daß diese Scheiben beidseitig konisch zur Trennungsebene hin zusammenlaufende rippenförmige Führungsansätze aufweisen, zwischen denen querverlaufende Rippen angeordnet sind, und daß im montierten Zustand zwischen zwei solchen Führungsansätzen eine Versteifungsrippe der Abdichtungselemente zum Liegen kommt.

Das wesentliche der Erfindung ist darin zu sehen, daß die ringförmigen Hohlräume des geteilten Dichtungskörpers mit Scheiben ausgefüllt sind, durch welche die Lamellen versteift werden. Die Lamellenstruktur bleibt erhalten, da die Dicke der Scheiben kleiner ist als die Weite der Hohlräume in axialer Richtung. Die ursprünglichen Hohlräume werden daher gewissermaßen nochmals unterteilt. Der eingelegten plastischen Dichtungsmasse wird durch diese eingesetzten Scheiben ein größerer Fließwiderstand entgegengesetzt, so daß diese Dichtungsmasse bei mechanischer Belastung der Kabel nicht mehr so leicht in die Hohlräume verdrängt werden kann. Eine weitere Erhöhung des Fließwiderstandes gegenüber der eingelegten plastischen Dichtungsmasse wird durch querliegende Rippen erreicht, die parallelliegend zur Trennungsebene auf beiden Seiten der eingelegten Scheiben angeordnet sind. Hierdurch wird verhindert, daß die plastische Dichtungsmasse beliebig tief in die Hohlräume eindringen kann. Da nun die lamellenförmigen Abdichtungselemente der Dichtungskörper ihrerseits bereits senkrecht zur Kabeleinführungsrichtung verlaufende Versteifungsrippen aufweisen, müssen die einsetzbaren Scheiben entsprechende Aussparungen aufweisen, oder es sind, wie im Ausführungsbeispiel gezeigt wird, auf beiden Seiten der Scheiben in gleicher Richtung verlaufende Führungsansätze angeordnet, zwischen denen die Versteifungsrippen der Abdichtungselemente des Dichtungskörpers geführt werden. Diese Haben außerdem den Vorteil, daß eine gute Führung der Scheiben innerhalb der Hohlräume gewährleistet ist. Ein Verdrehen der Scheiben beim Schneiden der Kabeleinführungsöffnungen innerhalb der Hohlräume kann somit verhindert werden. Die gestellte Aufgabe gemäß der Erfindung ist somit voll erfüllt; denn es wird mit den herkömmlichen Werkzeugen die erforderliche Kabeleinführungsöffnung ausgeschnitten, wobei durch die eingelegten Scheiben die guten Eigenschaften einer Lamellendichtung unter Berücksichtigung der erschwerten Bedingungen bei mechanisch belasteten Kabeln erhalten bleiben. Diese angedeuteten Eigenschaften beziehen sich in erster. Linie auf gute Dichtigkeit bei relativ geringem Schließdruck.

Die Erfindung wird nun anhand eines Ausführungsbeispiels näher erläutert, wobei in Fig. 1 ein Schnittbild des montierten Dichtungskörpers mit eingelegten Scheiben dargestellt ist. Die Fig. 2 zeigt die in die Hohlräume einzufügende Scheibe, und in Fig. 3 wird in einer Draufsicht auf die Trennungsebene des geteilten Dichtungskörpers der Einsatz der Scheibe zwischen zwei lamellenartigen Abdichtungselementen des Dichtungskörpers gezeigt.

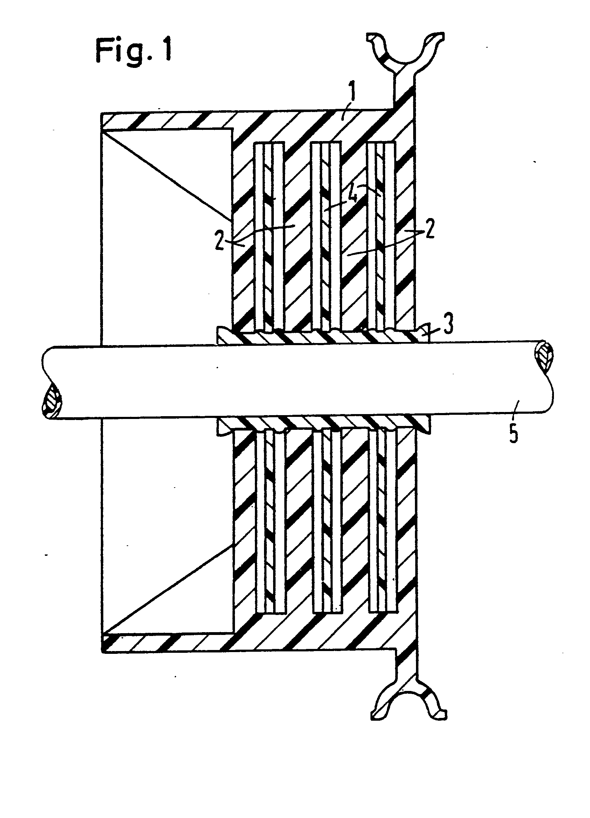

Die Fig. 1 zeigt schematisch die lamellenförmigen, in Achsrichtung hintereinander liegenden Abdichtungselemente 2 des geteilten Dichtungskörpers 1, der auf seiner Außenseite eine umlaufende kelchförmige Nut zum Einlegen von plastischer Dichtungsmasse aufweist. Die Abdichtungselemente 2 sind dem Kabeldurchmesser des eingeführten Kabels 5 entsprechend ausgeschnitten, und sind in Achsrichtung mit dauerplastischer Dichtungsmasse 3 belegt. In den zwischen den Abdichtungselementen 2 befindlichen ringförmigen Hohlräumen sind die Scheiben 4 erkennbar, deren Einführungsöffnungen ebenfalls im vorher genannten Schneidevorgang mit ausgeschnitten wurden. Hierdurch werden die Hohlräume gewissermaßen unterteilt, so daß der Fließwiderstand gegenüber der Dichtungsmasse erheblich erhöht wird. Diese Dichtungsmasse dringt somit nicht mehr so tief in die Hohlräume ein, da sie bei auftretender mechanischer Belastung des Kabels 5 nicht mehr so stark verdrängt werden kann.

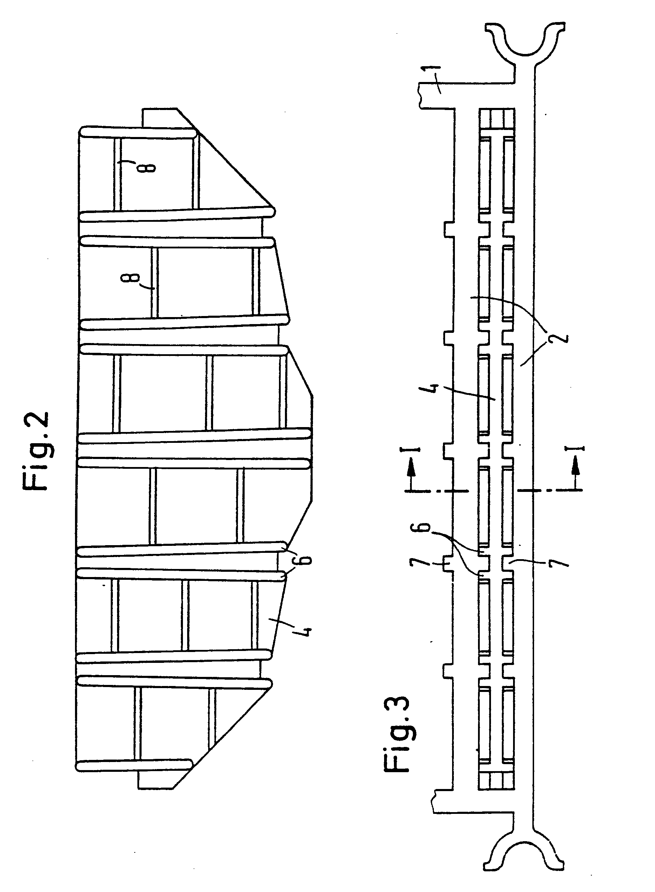

Fig. 2 läßt erkennen, daß die in die Hohlräume einzulegenden Scheiben 4 weitgehend der Form der ringförmigen Hohlräume angepaßt sind. Da es sich um einen geteilten Dichtungskörper handelt, weisen auch die Scheiben in etwa Halbkreisform auf. Die Abdichtungselemente 2 des Dichtungskörpers 1 weisen jedoch zur Verstärkung senkrecht verlaufende Versteifungsrippen 7 auf, die als Führung für die Scheiben 4 ausgenützt werden können. Um nun die Führung der Scheiben, die besonders beim Schneiden der Einführungsöffnungen sehr genau sein muß, zu gewährleisten, sind an beiden Seiten der Scheiben 4 rippenförmige Führungsansätze 6 angeordnet, die zur besseren Einführung konisch zur Trennungsebene hin zusammenlaufen. Zwischen zwei solchen Führungsansätzen 6 kommt im montierten Zustand eine Versteifungsrippe 7 der Abdichtungselemente 2 zu liegen, wie dies in der Fig. 3 besonders zur Geltung kommt. In dieser Fig. 3 wird eine auf die Trennungsebene gerichtete Draufsicht eines geteilten Dichtungskörpers 1 gegeben. Innerhalb des Hohlraumes zwischen zwei Abdichtungselementen 2 ist ein Scheibe 4 mit dem gegenseitigen Eingriff von Versteifungsrippen 7 und Führungsansätzen 6 angeordnet. Fig. 2 zeigt weiterhin die parallel zur Trennungsebene und zwischen den Führungsansätzen 6 verlaufenden Rippen 8, die ein tiefes Eindringen von Dichtungsmasse in die restlichen Hohlräume verhindern. Dies verstärkt den Fließwiderstand der plastischen Dichtungsmasse ebenfalls, was im Zusammenhang mit mechanisch belasteten Kabeln gemäß der Erfindung erwünscht wird. Es ergeben sich auf diese Weise nur mehr sehr kleine Kammern, in welche die Dichtungsmasse ausweichen kann, so daß ein völliges Abwandern der Dichtungsmasse verhindert wird.

## Patentanspruch

1. Dichtungskörper (1) mit lamellenförmigen, in Achsrichtung hintereinanderliegenden Abdichtungselementen (2) und mit ausschneidbaren Kabeleinführungsöffnungen zum Einführen von Kabeln in Kabelgarnituren, dadurch gekennzeichnet, daß in die ringförmigen Hohlräume zwischen der einzelnen Abdichtungselementen (2) des Dichtungskörpers (1) halbkreisähnliche Scheiben (4) aus schneidbarem Material eingesetzt sind, daß diese Scheiben (4) beidseitig konisch zur Trennungsebene hin zusammenlaufende rippenförmige Führungsansätze (6) aufweisen, zwischen denen querverlaufende Rippen (8) angeordnet sind, und daß im montierten Zustand zwischen zwei solchen Führungsansätzen (6) eine Versteifungsrippe (7) der Abdichtungselemente (2) zum Liegen kommt.

## Revendication

1. Garniture (1) d'étanchéité, à éléments d'étanchéité lamellaires, disposés l'un derrière l'autre suivant la direction axiale, et à ouvertures, qui peuvent être découpées et qui sont destinées à l'introduction de câbles dans des accessoires de câbles, caractérisée en ce que dans les espaces vides annulaires compris entre les éléments (2) de la garniture (1) sont engagés des disques (4) hémi-circulaires, qui sont en une matière pouvant être découpée et qui présentent des appendices (6) de guidage en forme de barrettes, convergeant coniquement des deux côtés vers le plan de séparation et entre lesquels sont interposées des barrettes (8) transversales et, à l'état monté, une barrette (7) de renforcement des éléments (2) d'étanchéité vient entre deux appendices (6) de guidage

## Claim

1. A sealing body (1) having lamellar sealing elements (2) which are arranged one behind another in the axial direction and having cable inlet openings which can be cut out, for inserting cables into cable fittings, characterised in that semicircle-like plates (4) made of a material that can be cut, are inserted into the annular spaces between the individual sealing elements (2) of the sealing body (1); that these plates (4) have on both sides, rib-shaped guide attachments (6) which conically converge towards the plane of separation and between which there are arranged transverse ribs (8); and that, in the assembled state, a bracing rib (7) of the sealing elements (2) lies between two such guide attachments (6).

Fig. 1

# Fig.2

# Fig.3